Europäisches Patentamt

**European Patent Office**

Office européen des brevets

(19)

(11) Publication number: **0 082 067**
A2

(12) # EUROPEAN PATENT APPLICATION

(21) Application number: 82402243.8

(51) Int. Cl.³: **B 29 D 3/02**

(22) Date of filing: 08.12.82

(30) Priority: 10.12.81 US 329490
03.09.82 US 414738

(43) Date of publication of application: 22.06.83
Bulletin 83/25

(84) Designated Contracting States: **DE FR GB IT NL**

(71) Applicant: **Schlumberger Limited, 277 Park Avenue, New York, N.Y. 10172 (US)**

(84) Designated Contracting States: **DE GB NL**

(71) Applicant: **SOCIETE DE PROSPECTION ELECTRIQUE SCHLUMBERGER, 42, rue Saint-Dominique, F-75340 Paris Cedex 07 (FR)**

(84) Designated Contracting States: **FR IT**

(72) Inventor: **McNerney, Richard P., 10307 CLiffwood, Houston Texas 77035 (US)**
Inventor: **Rostocki, Terry Alan, 12319 Dorrance, Stafford Texas 77477 (US)**

(74) Representative: **Chareyron, Lucien et al, Schlumberger Limited 42, rue Saint-Dominique, F-75340 Paris Cedex 07 (FR)**

(54) Graphite fiber tensile strength member, cable assemblies employing same, and method of making.

(57) A strength member, such as a cable, is made from a tow or multiple tows of graphite fibers or filaments. In one embodiment a tow of graphite filaments of indeterminate length is saturated with an uncured polymeric impregnant to fill voids and interstices between the filaments. Excess saturant is removed and the tow is coated with a release agent. The tow is then cabled together in a helix, such as by cabling onto a central core, and the impregnant is then cured to a solid matrix. In another embodiment multiple tows of high-strength filaments of indeterminate length, each saturated with a semi-cured polymeric impregnant, are heated, to accelerate the curing, shaped, and then are cabled together in a helix, such as by cabling onto a central core, where the impregnant is then cured to a solid matrix. The matrix enhances the effective tensile strength of the tow. The semi-curing and acceleration of the cure just before cabling prevent the individual tows from adhering to one another while assuring that the final cure configuration is a formed helix.

GRAPHITE FIBER TENSILE STRENGTH MEMBER,  0082067

CABLE ASSEMBLIES EMPLOYING SAME, AND

METHOD OF MAKING

## BACKGROUND OF THE INVENTION

### 1. Field of the Invention

The present invention relates to tensile strength members and, particularly, to tensile strength members composed primarily of high-strength fibers and their use in cables encountering significant and frequent bending.

### 2. The Prior Art

The exceptional strength characteristics of fibers of materials such as glass, graphite, Kevlar, and boron are well known. Such fibers are often employed in composite structural members produced by embedding relatively short (chopped) fibers in a rigid matrix (such as an epoxy resin) at random orientations.

Such fibers are also used in virtually unlimited lengths to exploit their unique tensile strength properties. Although continuous-length fibers are finding increasing application, most applications appear to be essentially static. That is, the matrix material in which the fibers are embedded is usually rigid and, even in somewhat "flexible" applications such as electrical and/or optical communication cables, is expected to remain essentially stationary after the structure has been placed in service. With such applications, it is feasible to severely limit the bending and elongation forces applied to the structure during transportation and installation.

Many structures require high tensile strength properties for non-static applications and requirements for tensile and bending strength are relatively much higher. Such applications include purely structural cables, as well as robust cables for transmitting information in a non-static environment, such as oil well logging cables and geophysical prospecting cables.

A typical oil well logging cable comprises an outer armor sheath enclosing seven (7) or more electrical conductors and having a diameter of less than 1-1/2 inch. Each time a well is logged, the cable will be extended as much as 30,000 feet or more into the ground, be subjected to borehole pressures exceeding 25,000 PSI and borehole temperatures of 225°C or higher, be attacked by highly corrosive chemicals within the borehole, and encounter tensions of up to 10,000 pounds. While under these stresses, the cable passes around sheave wheels having radii of, for example, 1-1/2 feet to 3 feet. Typical prior art tensile strength members utilizing high-strength fibers have heretofor not been suitable for use in the demanding conditions found in oil well logging.

## SUMMARY OF THE INVENTION

It is a general object of the present invention to provide an improved method for making a tensile-strength assembly from tows of high strength filaments and to provide a tensile-strength assembly made of these filaments.

This and other objects are attained, in accordance with one aspect of the invention by a process for making an elongate tensile-strength assembly of indeterminate length, comprising: accelarating the curing of a plurality of tows of high-strength filaments of indeterminate length saturated with a semi-cured polymeric impregnant; curing the accelerated impregnant sufficiently to prevent substantial bonding of the saturated tows to one another or other materials which they may contact; helically forming the plurality of impregnated tows about one another, and subsequently allowing the impregnant in the helically formed saturated tows to cure to a solid matrix while in the helical configuration and while remaining essentially dry or non-tacky to cause the tows to act in unison when the assembly thereof is tensioned while affording the assembly substantial flexibility due to the non-bonding of the tows to one another.

Another aspect of the invention includes an elongate tensile-strength assembly of indeterminate strength, comprising: a plurality of separate, unconnected, helically formed tows of filaments extending helically about one another along the length of the assembly, and saturated with a solid polymeric impregnant to bond the filaments of each said tow in a substantially rigid helical matrix while leaving the tows free of bonding to each other.

0082067

A further aspect of the invention is attained by the process of making an elongate tensile-strength member of indeterminate length, comprising the steps of: saturating a tow of graphite filaments of undeterminate length with an uncured polymeric impregnant to thereby fill voids, and interstices between said filaments; removing excess impregnant from the saturated tow; coating said impregnated tow with a release agent to minimize bonding of said tow to other materials; maintaining said impregnant in an uncured state while forming said impregnated tow in a helix; and subsequently allowing the impregnant in said helically formed saturated tow to cure to a solid matrix.

BRIEF DESCRIPTION OF THE DRAWINGS

Figure 1A shows a segment of a tow of high-strength filaments;

Figure 1B shows a segment of three filaments of a tow under tension;

Figure 2 shows a diagrammatic cross-section of an apparatus for saturating a continuous-length tow of high-strength filaments with a liquid impregnant;

Figure 3 shows a diagrammatic cross-section of a tow of filaments saturated with impregnant;

Figure 4 shows a segment of an impregnated tow of filaments, wrapped with a band of film;

Figure 5 shows a perspective view of a segment of a composite cable assembly, with layers of the assembly cut away to show constructional features;

Figure 6 is a side cross-sectional view of an apparatus for fabricating a tensile-strength member according to the present invention;

Figure 7 is a cross-sectional view taken on line 2-2 in Fig. 1;

Figure 8 is a cross-sectional view of a shaped tow just prior to cabling, taken on line 3-3 in Fig. 1;

Figure 9 is a cross-sectional view of a cable fabricated according to the present invention, taken on line 4-4 in Fig. 1;

Figure 10 is a cross-sectional view of another cable fabricated according to the present invention.

## THE PREFERRED EMBODIMENTS

The invention will not be described with reference to the accompanying drawings. It will be understood that the preferred embodiments described herein are by way of illustration and are not intended to limit the scope of the invention as defined by the appended claims. Those of skill in the art will recognize additional forms and uses of the invention described herein which fall within the spirit and scope of the appended claims.

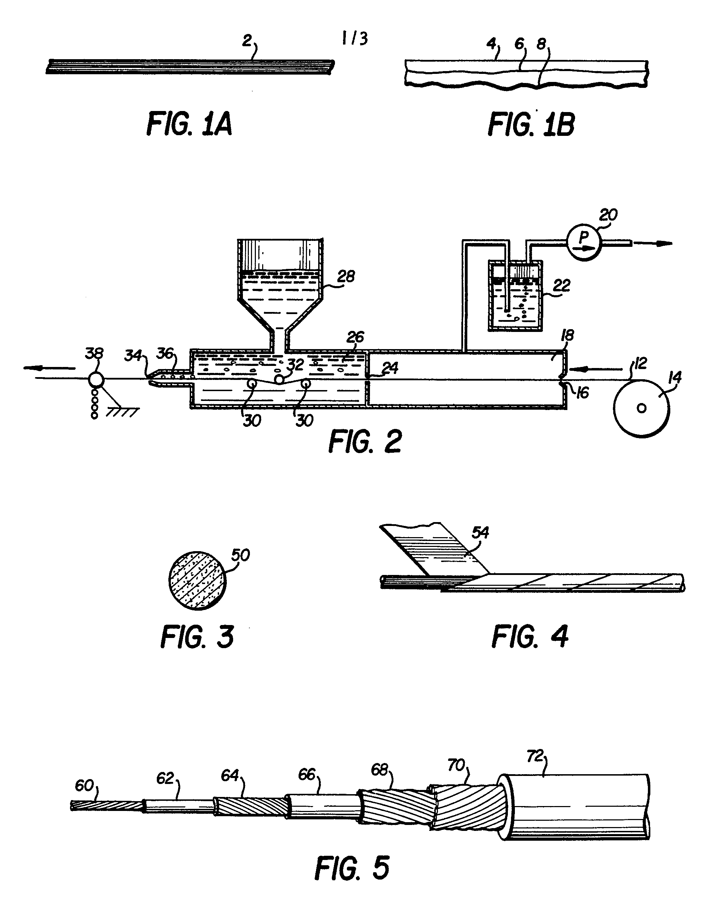

Figure 1A shows a segment of a tow of high-strength graphite filaments, which is essentially untwisted or twisted yarn of many thousands of fibers extending longitudinally adjacent one another. Most of the fibers extend the entire length of the tow, the tow being of indeterminate length. Since the fibers are not of precisely uniform length, certain of the fibers (or filaments) will be subjected to greater tensile stresses than others when the tow is placed in tension.

Figure 1B diagramatically illustrates this prinicple, wherein filament 4 is of shortest length and subjected to the greatest tensile stress, and filaments 6, 8 are of greater length and are subjected to little or no tensile stress. When a tow of such filaments is tensioned, the full theoretical tensile strength of the tow (tensile strength of one filament times number of filaments) will not be realized because the shorter filaments will be subjected to stresses beyond their tensile strength, causing them to break and thereby transferring the load to the next longer filaments. Thus, while the tow is very flexible and can be bent over a short radius when not under great tension, it has severly limited tensile strength.

Impregnating the tow with a rigid or semi-rigid (after curing) matrix increases the tensile strength over that of a non-impregnated tow by distributing the loading on the individual filaments. This limits the lateral mobility of the fibers, so that the longer fibers cannot "avoid" their share of the tensile load by straightening out when tensioned. Hence, the more rigid the matrix employed, the greater the tensile strength of the tow, but the lower the flexibility.

Figure 2 shows diagrammatically an apparatus for saturating a continuous tow of high-strength filaments with a liquid polymeric impregnant. A continuous tow 12 of high-strength filaments is supplied from a reel 14 under tension and passed through orifice 16 of a vacuum chamber 18. Orifice 16 is sized to permit passage of tow 12 without significant friction which would break individual filaments. A vacuum pump 20 connected to chamber 18 through an oil bath 22 maintains a near-vacuum in chamber 18. Oil bath 22 protects pump 20 from any stray, broken fibers from tow 12.

Tow 12 then passes through an orifice 24 into a bath 26 of liquid polymeric impregnant, which is replenished from a hopper 28. It is preferred that the tow pass over spreaders 30 and under a spreader 32 to assure complete wetting of the filaments in bath 26. The spreaders may comprise, for example, glass rods fixed transversely to the path of tow 12 which cause lateral spreading of the tow.

Tow 12 exits bath 26 via an orifice 34 sized to permit passage of the tow without friction which would damage individual filaments. Orifice 34 is, however, preferably as small as possible to remove excess impregnant from the saturated tow. A sponge or cloth wiper 38 may also be employed to remove excess impregnant from the saturated tow.

Figure 3 shows the generally circular cross-section of a tow saturated with the impregnant. Each filament is thoroughly saturated over its length and there are no bubbles or voids.

In one embodiment the tow, saturated with uncured liquid impregnant, is coated with a suitable release agent which prevents bonding of the tow to other tows or to other materials of a composite structure in which the tow is employed, when the saturant becomes cured. Figure 4 illustrates wrapping of the tow with a suitable band of film, such as polyester tape. The taping process is preferably conducted immediately following removal of excess impregnant and prior to reeling of the saturated tow. The tow may alternatively be coated with release agents such as a soft way (i.e., carnauba) extruded or wiped over the surface of the saturated tow, or a suitable polymeric (thermoplastic or thermoset) material extruded over the saturated tow. The extrusion process is conducted with application of as little heat as possible, to prevent curing or undue shortening of the pot life of the impregnant.

After the saturated tow is coated, it is wound on reels or bobbins and, if necessary to prevent curing of the impregnant, stored at low temperature.

The coated, saturated tows are wound on respective bobbins and the bobbins placed on respective arbors of a cabling machine. The tows are then helically laid onto a central core in one or more layers, and the impregnant is allowed to cure, either at room temperature or by application of heat.

Some impregnant may escape the release agent surrounding the tow and thereby cause partial bonding to adjacent tows (or to other members of a composite cable assembly). While the cable is nonetheless flexible, "working" or normal use will break such bonds and enhance flexibility. As in conventional cables, the tensile-strength members are capable of moving longitudinally relative to one another upon flexing of the cable assembly. The cabling (or helically laying) of tensile strength members enhances flexibility of the cable assembly.

Figure 5 illustrates an application of the above-described techniques to manufacture a coaxial cable assembly usable in oilfield borehole logging. The cable assembly has a central, twisted and stranded single conductor 60 surrounded by an extruded thermoplastic sheath 62. Cabled over sheath 62 is a coaxial shield of wire 64, in turn covered by an extruded thermoplastic sheath 66. The "coax" assembly 60-66 is employed as a central core which is passed through a cabling machine and helically laid with two layers 68, 70, of impregnated and coated high-strength filament tows. Layer 70 may be wrapped with polymer film (not shown) before being jacketed with a thermoplastic material 72.

In a cable assembly actually built as shown in Figure 5, the core 60-66 had an outer diameter of 0.37 inch, and each of the tows comprised Union Carbide grade WYP6-1/0 graphite filaments having 15,000 filaments per tow. Such graphite filaments are of graphitized polyacrylonitrile (PAN), and have the necessary high tensile strength, long elongation at break and flexibility for the purpose. The impregnant employed was XGL7-49E, available from Fluid Polymer Systems, P.O. Box 926, El Cajon, CA 92022. The pot life of the XGL7-49E impregnant was sufficiently long to permit the tows to be impregnated, tape wrapped as shown in Figure 4 and wound on bobbins of a conventional planetary cabling machine.

The XGL7-49E epoxy has, when cured, a flexural modulus of about 260 kg/mm$^2$ (370M psi), a flexural strength of about 11.5 kg/mm$^2$ (16.4M psi), a tensile strength of about 6.1 kg/mm$^2$ (8680 psi) and a durometer "D" hardness of about 82D. The average experimentally-measured tensile strength of the dry yarn was approximately 30,000 psi, and that of the yarn impregnated with the XGL7-49E epoxy (cured) was approximately 330,000 psi. This compares favorably with a material conventionally used for logging cable strength members, GIPS (Galvanized Improved Plow Steel), which has a tensile-strength rating of 260,000 psi.

Following winding of the saturated tows on bobbins, the bobbins (and the bobbin arbors) of the cabling machine were chilled. The tows were contrahelically cabled onto a central core of one (1) kilometer length. The assembly was immediately thereafter tape-wrapped with a polymer film, and stored at $180^{O}$F for two (2) days to dure the impregnant. After curing, the assembly was "worked" to enhance flexibility. A thirty (30) mil. thick jacket of Tefzel was thereafter extruded over the assembly to complete the cable. It is noted that use of an impregnant having a shorter pot life than that of XGL7-49E may require that some or all of the process steps be conducted at lower than room temperature.

Another embodiment of the present invention provides tows which are not bonded to each other but does not require the release agent of the first embodiment. The graphite fibers used in this embodiment are any of several which are commercially available, such as Thornel 300 (available from Union Carbide). The impregnant may be, for example, an epoxy novolaks having an amine curative. A suitable epoxy is Fiberite 948B (Fiberite Manufacturing Company, Winona, Minn.).

The tows may be saturated with the impregnant as part of a continuous process, or they may be purchased commercially in semi-cured, B-staged state ready for further processing. Such semi-cured tows, for example HYE1048BC (Fiberite Manufacturing Company), are commonly purchased and then processed or woven into a more complex material or fabric which then cures into a solid member as the tows cross-link to one another during final curing.

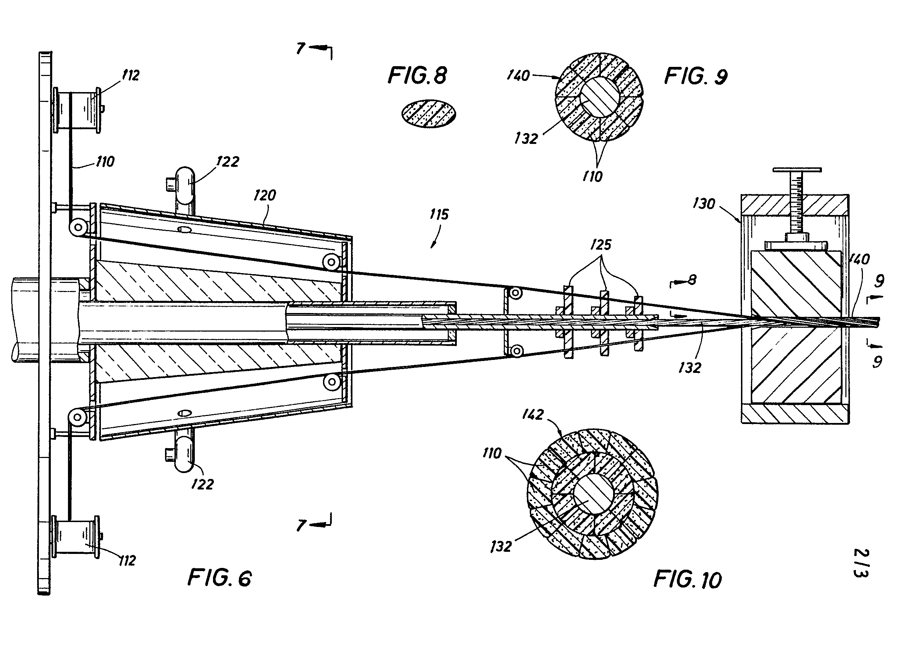

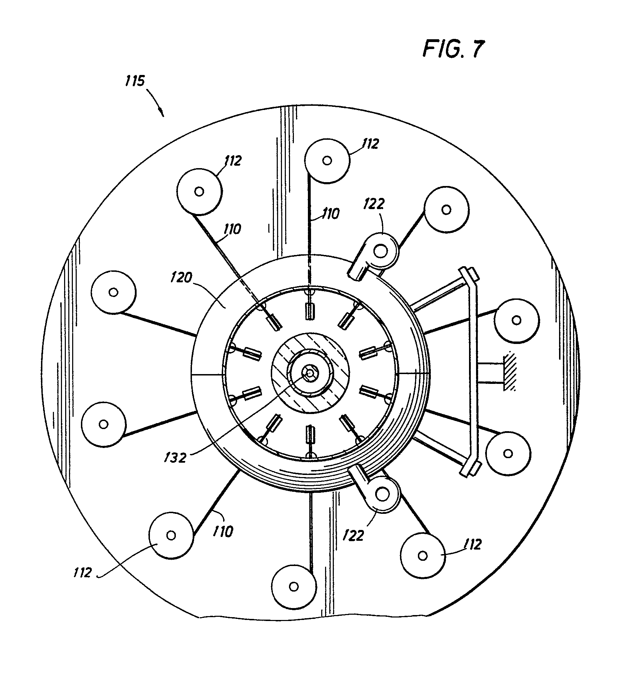

As shown in Figure 6, the semi-cured tows 110 are mounted on payoff bobbins 112 on a cabling machine 115. The tows and bobbins may have been previously chilled in order to retard further curing of the impregnant. The individual tows 110 are then unwound and passed through a heat tunnel 120, heated by heating apparatus 122, which accelerates the curing of the impregnated tows.

Heating the B-staged impregnant to accelerate the curing will ordinarily also render the surface once again wet or "tacky", such that the tows are again ready to stick and bond to one another or other materials which they may contact. Thus, in the present invention, a dwell time is provided which is sufficient for curing the accelarated impregnant so that the surface once again become "dry", or non-tacky, even though heated, to prevent substantial bonding of the saturated tows to one another or such other materials as they may contact. The length of heat tunnel 120, the rate of movement of the tows 110, and the temperature within heat tunnel 120 are all adjusted to provide the desired degree of accelration and curing of the impregnated tows.

Next the tows are conducted or guided through a series of forming dies 125 which form each tow, as by rolling the sides up and in, into a shaped configuration such as the non-circular cross-section shown in Fig. 8. The tows then pass into a closing eye 130 where they are helically wound or formed about one another. In the preferred embodiment, a cable, is fabricated. Thus the tows 110 are wound about a cable core 132, such as the type used in a coaxial communications cable.

As the cross-sectional view of the cable in Fig. 9 illustrates, the individual tows at this point have been pressed even further into generally non-circular cross-sectional shapes so that they occupy the minimum cross-sectional area with essentially little or no void space therebetween. This is highly desirable, of course, since it keeps the total volume of the cable to a minimum, and enhances the cable strength and stability. Furthermore, due to the above-described curing sequence, this high density packing can be provided without bonding or coalescing of the impregnant in the tows with one another. Next, since some small amount of bonding may yet sometimes take place, the asembly is preferably "worked" by passing the assembly around several post-former pulleys (not shown) which flex the cable assembly. This breaks such few bonds as may have formed between adjacent tows during the cure of the saturated tows subsequent to the helical laying thereof.

If more than one counter-rotating layer of tows 110 is to be provided in the cable assembly, the assembly 140 now issuing from the cabling machine 115 then is fed into another cabling machine in which essentially the same process is again conducted to apply a second layer of tows 110. That is, assembly 140 is then treated the same way as the cable core 132 was in the above-described operation in machine 115. Fig. 10 shows a cross-section of the resulting cable 142.

Next, if a jacket of some kind is eventually to be provided for the cable assembly 140, a tape such as Tefzel (a Dupont fluorocarbon) tape may be wrapped about the cable assembly 140 for reasons described further below.

Finally, the cable assembly 140 is accumulated, as on a conventional takeup reel (not shown). It may then be placed in a hot box (not shown) for additional post-curing in order further to realize the potential strength of the assembly.

0082067

An external jacket, such as a Tefzel jacket may then be extruded onto the cable assembly 140 by conventional means. It has been found that the heat of the extrusion process can momentarily evolve small amounts of gas from the organic compounds in the cable assembly 140. Thus, a wrapping of tape may advantageously contain such gas to prevent the formation of bubbles in the jacket before it has a chance to cool and solidify.

As may be seen, therefore, the present invention has numerous advantages. Principally, it provides a versatile, inexpensive, reliable, and effectie process, and the resulting assembly, for making an elongate tensile-strength assembly of virtually indeterminate length. The assembly includes a plurality of impregnated strength member tows which are free of residual stress in their shaped and fully-cured helical configuration in the strength member. The process can be effected using known materials while the tows remain distinct and free to slip relative to one another to readily accommodate flexing of the strength member assembly.

While the process and product herein described constitute preferred embodiments of the invention, it is to be understood that the invention is not limited to these precise products and processes, and that changes may be made therein without departing from the scope of the invention.

What is claimed is:

1.      A process for making an elongate tensile-strength assembly of indeterminate length, characterized by:

accelarating the curing of a plurality of tows of high-strength filaments of indeterminate length saturated with a semi-cured polymeric impregnant;

curing the accelerated impregnant sufficiently to prevent substantial bonding of the saturated tows to one another or other materials which they may contact;

helically forming the plurality of impregnated tows about one another; and

subsequently allowing the impregnant in the helically formed saturated tows to cure to a solid matrix while in the helical configuration and while remaining essentially dry or non-tacky to cause the tows to act in unison when the assembly thereof is tensioned while affording the assembly substantial flexibility due to the non-bonding of the tows to one another.

2.      The process of claim 1 characterized by forming each of the accelerated tows into a non-circular cross section prior to helically forming them.

3.      The process of claim 1 or 2 characterized in that said step of helically forming the impregnated tows about one another further comprises helically laying the tows on a generally cylindrical cable core member free of bonding of the tows to the cable core member due to the partially cured state thereof.

4.      The process of claim 1, 2 or 3 characterized by post-curing the helically formed assembly to further realize the potential strength thereof.

5.      The process of any one of claims 1-4 characterized by the step, after substantial curing of the impregnant, of flexing the assembly to break such few bonds of the impregnant as may have formed between adjacent tows during the curing of the saturated tows subsequent to the helical laying thereof.

0082067

6.      The process of any one of claims 3-5 characterized in that said step of helically laying the tows on a central core further comprises contrahelically laying at least two layers of the impregnated tows around the central core.

7.      The process of any one of claims 1-6 characterized in that the saturated tows of step (a) are produced by the steps of:
        individually saturating a plurality of tows of high-strength filaments of indeterminate length with an uncured polymeric impregnant to fill voids and interstices between the filaments with the impregnant; and
        semi-curing the saturated tows to prevent substantial bonding of the saturated tows to other tows or materials which they may contact.

8.      An elongate tensile-strength assembly made by the process of any one of claims 1-7.

9.      An elongate tensile-strength assembly of indeterminate length, characterized by:
        a plurality of separate, unconnected, helically formed tows of filaments extending helically about one another along the length of the assembly, and saturated with a solid polymeric impregnant to bond the filaments of each said tow in a substantially rigid helical matrix while leaving the tows free of bonding to each other.

10.     The assembly of claim 9, characterized in that said impregnant comprises an epoxy resin.

11.     The assembly of claim 9 or 10 characterized in that said impregnant is substantially hydrolytically stable.

12.     The assembly of claim 9, 10 or 11 characterized in that each said tow contains between about 3,000 and about 30,000 continuous-length carbon filaments.

13.     The assembly of any one of claims 9-12 characterized in that a release agent is utilized to prevent the tows from bonding to each other.

14.     The assembly of any one of claims 9-13 characterized in that said tow is formed in a helix.

15.     The assembly of claim 14 characterized in that said helix is formed around a central core.

16.     The assembly of claim 15, characterized in that said central core comprises a composite structure having at least one electrical conductor.

17.     The assembly of claim 15 characterized in that said central core comprises a composite structure having at least one optical fiber.

18.     The assembly of claim 15, 16 or 17 characterized by jacket means surrounding said tensile-strength members to protect said members from abrasion and transverse shear stresses when said assembly is in use.

19.     The process of making an elongate tensile-strength member of indeterminate length, characterized by the steps of:
        saturating a tow of graphite filaments of undeterminate length with an uncured polymeric impregnant to thereby fill voids, and interstices between said filaments;
        removing excess impregnant from the saturated tow;
        coating said impregnated tow with a release agent to minimize bonding of said tow to other materials;
        maintaining said impregnant in an uncured state while forming said impregnated tow in a helix; and
        subsequently allowing the impregnant in said helically formed saturated tow to cure to a solid matrix.

20.     An elongate tensile-strength assembly made by the process of claim 19.

FIG. 1A

FIG. 1B

FIG. 2

FIG. 3

FIG. 4

FIG. 5

FIG.8

FIG. 9

FIG. 6

FIG. 10

FIG. 7